# EUROPÄISCHE PATENTSCHRIFT

(11) **EP 1 088 406 B1**
(45) Veröffentlichungstag und Bekanntmachung des Hinweises auf die Patenterteilung: **14.04.2004**
(21) Anmeldenummer: 99939346.5
(22) Anmeldetag: 16.06.1999
(51) Int. Cl.: H04B 7/005, H04B 1/713

(54) **VERFAHREN UND SYSTEM ZUR REGELUNG DER ÜBERTRAGUNGSLEISTUNG EINER MOBILSTATION EINES MOBILFUNKSYSTEMS**
METHOD AND SYSTEM FOR REGULATING THE TRANSMISSION POWER OF A MOBILE STATION OF A MOBILE RADIO SYSTEM
PROCEDE ET SYSTEME POUR LA REGULATION DE LA PUISSANCE DE TRANSMISSION D'UNE STATION MOBILE D'UN SYSTEME RADIOTELEPHONIQUE MOBILE

(30) Priorität: 17.06.1998 DE 19827023
(43) Veröffentlichungstag der Anmeldung: 04.04.2001
(73) Patentinhaber: SIEMENS AKTIENGESELLSCHAFT, 80333 München (DE)
(72) Erfinder: DICKER, Olaf, D-46459 Rees (DE); KOCKMANN, Jürgen, D-48599 Gronau-Epe (DE)
(86) Internationale Anmeldenummer: PCT/DE1999/001767
(87) Internationale Veröffentlichungsnummer: WO 1999/066656

(56) Entgegenhaltungen:
- EP-A- 0 652 648
- EP-A- 0 668 665
- US-A- 5 528 623
- OWEN F C: "THE DECT RADIO INTERFACE" IEE COLLOQUIUM ON CT2/CAI AND DECT CORDLESS TELECOMMUNICATIONS, XP000199462

## Beschreibung

Die vorliegende Erfindung betrifft ein Verfahren und ein System zur Regelung der Übertragungsleistung einer Mobilstation eines Mobilfunksystems, in dem Informationen in verschiedenen Trägerfrequenzen mittels einem Frequenzsprungverfahren übertragen werden.

Um die bestehenden verschiedenen analogen und digitalen Standards in Europa zu ersetzen, wurde Anfang der 90er Jahre der DECT-Standard verabschiedet. Er ist der erste gemeinsame europäische Standard für schnurlose Telekommunikation. Ein DECT-Netz ist ein mikrozellulares, digitales Mobilfunknetz für hohe Teilnehmerdichten. Es ist in erster Linie für den Einsatz in Gebäuden konzipiert. Eine Verwendung des DECT-Standards im Freien ist jedoch ebenso möglich. Die Kapazität des DECT-Netzes von rund 10.000 Teilnehmern pro Quadratkilometern macht aus dem Schnurlos-Standard eine ideale Zugangstechnologie für Netzbetreiber. Nach dem DECT-Standard ist sowohl die Übertragung von Sprache als auch die Übertragung von Datensignalen möglich. So können auf DECT-Basis auch schnurlose Datennetze aufgebaut werden.

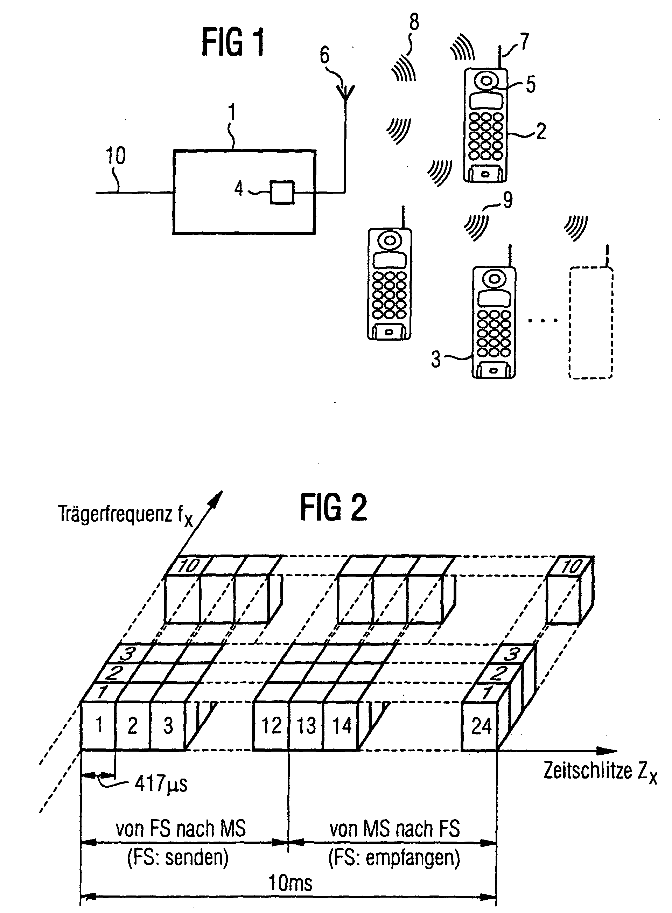

Im folgenden soll der DECT-Standard bezugnehmend auf Fig. 2 näher erläutert werden. Unter der Bezeichnung DECT (Digital Enhanced Cordless Communication) wurde für Europa ein digitales, schnurloses Telekommunikationssystem genormt. Damit eignet sich dieses System in Verbindung mit der Vermittlungsfunktion einer Telekommunikations-Anlage für den mobilen Telefon- und Datenverkehr in einem Bürogebäude oder auf einem Betriebsgelände. Die DECT-Funktionen ergänzen eine Telekommunikations-Anlage und machen sie damit zur Feststation FS des schnurlosen Telekommunikationssystems. Auf bis zu 120 Kanälen können digitale Funkverbindungen zwischen der Feststation FS und den maximal 120 Mobilstationen MS hergestellt, überwacht und gesteuert werden.

Gesendet wird im Frequenzbereich 1,88 GHz bis 1,9 GHz auf maximal zehn unterschiedlichen Trägerfrequenzen (Trägern). Dieses Frequenz-Multiplex-Verfahren wird als FDMA (Frequency Division Multiple Access) bezeichnet.

Auf jeder der zehn Trägerfrequenzen werden zeitlich nacheinander im Uplink und im Downlink jeweils zwölf Zeitschlitze im Zeitmultiplex-Verfahren TDMA (Time Division Multiple Access) übertragen. Somit ergeben sich für die schnurlose Telekommunikation nach dem DECT-Standard bei zehn Trägerfrequenzen und jeweils zwölf Zeitschlitzen im Uplink und im Downlink jeweils 120 Kanäle. Da z. B. für jede Sprechverbindung ein Kanal erforderlich ist, ergeben sich 120 Verbindungen zu maximal 120 Mobilstationen MS. Auf den Trägern wird im Wechselbetrieb (Duplex, TTD) gearbeitet. Nachdem zwölf Kanäle (Kanäle 1 - 12) von der Feststation gesendet worden sind, schaltet sie auf Empfang und empfängt in der Gegenrichtung zwölf Kanäle (Kanäle 13 - 24) von wenigstens einer Mobilstation.

Ein Zeitmultiplex-Rahmen besteht damit aus 24 Kanälen (s. Fig. 2). Dabei werden Kanal 1 bis Kanal 12 von der Feststation FS zu den Mobilstationen MS übertragen, während Kanal 13 bis Kanal 24 in der Gegenrichtung von den Mobilstationen MS zur Feststation FS übertragen werden. Die Rahmendauer beträgt 10 ms. Die Dauer eines Kanals (Zeitschlitzes, Slot), beträgt 417 µs. In dieser Zeit werden 320 Bit Informationen (z. B. Sprache) und 104 Bit Steuerdaten (Synchronisierung, Signalisierung und Fehlerkontrolle) übertragen. Die Nutz-Bit-Rate für einen Teilnehmer (Kanal) ergibt sich aus den 320 Bit Informationen innerhalb von 10 ms. Sie beträgt somit 32 Kilobit pro Sekunde.

Für Fest- und Mobilstationen wurden integrierte Bausteine entwickelt, die die DECT-Funktionen umsetzen. Dabei erfüllen die Feststation und die Mobilstation ähnliche Funktionen. Einer dieser genannten integrierten Bausteine ist dabei das HF-Modul, d.h. das Modul, das die eigentliche Funktion des Empfangens und Sendens im HF-Bereich ausführt.

Es ist bekannt, sogenannte Fast-Hopping HF-Module zu verwenden, d.h. HF-Module, die einen Wechsel der Trägerfrequenz von einem Zeitschlitz bzw. Kanal zum nächsten ausführen können. Diese Fast-Hopping HF-Module sind indessen sehr aufwendig und teuer. In der Praxis werden daher vor allem sogenannte Slow-Hopping HF-Module verwendet, d.h. Module, die einen gewissen Zeitraum zum Wechseln der Trägerfrequenz benötigen. In der Praxis entspricht der Zeitraum, den das Slow-Hopping HF-Modul zum Wechsel der Trägerfrequenz benötigt, im wesentlichen dem Zeitraum eines Zeitschlitzes. Dies bedeutet, daß nach jedem aktiven Zeitschlitz, d.h. nach jedem Schlitz, in dem Daten übertragen werden, ein sogenannter inaktiver Zeitschlitz (Blind Slot) folgen muß, in dem keine Daten übertragen werden können. Dies bedeutet, daß in der Praxis statt der möglichen zwölf Verbindungen auf einer Trägerfrequenz beim DECT-Standard nur sechs Verbindungen ausgeführt werden können.

Ein DECT-Kanal wird durch seinen Zeitschlitz und seine Trägerfrequenz festgelegt. Dabei ist zu beachten, daß gemäß dem DECT-Standard die Organisation der Wiederverwendung von physikalischen Kanälen mittels einer dynamischen Kanalwahl (dynamic channel selection) erfolgt. Dadurch erübrigt sich eine aufwendige Frequenzplanung wie in zellularen Systemen. Für einen Verbindungsaufbau werden kontinuierlich die Signalpegel aller Kanäle gemessen und in einer Kanalliste (channel map) die störungsfreien Kanäle verwaltet. Während einer Verbindung werden weiterhin die Signalpegel aller Kanäle sowie die Empfangsqualität überwacht. Falls diese Überwachung ergibt, daß der gerade benutzte Kanal auf einer Trägerfrequenz übertragen wurde, die gestört wurde (beispielsweise durch die Einwirkung einer Übertragung auf der gleichen Trägerfrequenz von bzw. zu einer anderen Feststation), wird für den nächsten aktiven Zeitschlitz automatisch eine andere Trägerfrequenz gewählt, die in der Kanalliste als störungsfrei eingetragen ist.

Als Alternative kann auch ein sogenanntes Frequency-Hopping-Verfahren verwendet werden, bei dem die Trägerfrequenz nach einem vorbestimmten Zeitraum, beispielsweise einem Rahmen der Übertragung gewechselt wird.

Für Länder außerhalb Europas muß der DECT-Standard gegebenenfalls abgeändert und auf die lokalen Gegebenheiten angepaßt werden. Beispielsweise in den USA kann die Übertragung nicht in dem normalen DECT-Bereich zwischen 1,88 und 1,90 GHz erfolgen, sondern es steht vielmehr das allgemein zugängliche 2,4 GHz ISM-Band (Industrial, Scientific, Medical) zur Verfügung. Weiterhin müßten Änderungen zur Anpassung an die nationalen Vorschriften, wie beispielsweise die amerikanische Vorschrift FCC part 15, vorgenommen werden. Die genannte amerikanische Vorschrift beschreibt die für die Luftschnittstelle zulässigen Übertragungsverfahren, Sendeleistungen und die zur Verfügung stehende Bandbreite.

Beim DECT-Standard enthält jeder Zeitschlitz neben den oben genannten 320 Informationsbit noch weitere 104 für die Signalübertragung benötigte Bits sowie 56 Bits eines Guard-Felds, so daß jeder Zeitschlitz insgesamt 480 Bit enthält. Daraus ergibt sich eine Datenrate von (24 x 48 Bit)/10ms =)1 152 000 Bit/s. Eine Datenrate in dieser Höhe ist in dem amerikanischen ISM-Band nicht sinnvoll, da pro nutzbarem Kanal eine zu große Bandbreite benötigt werden würde. Trotz diesen Vorschriften sollen aus Kostengründen möglichst unverändert für den DECT-Standard entwickelte Bauteile wie z. B. der Basisband-Controller weiterverwendet werden können.

Weiterhin soll, da die Mobilstationen in der Regel batterie- oder akkubetrieben sind, die in ihnen verbrauchte Energie während des Betriebes möglichst gering sein, um lange Betriebszeiten zu ermöglichen.

Aus der ETS 300 578: March 1995 (GSM 5.08 version 4.12.0) ist System bekannt bei dem eine Änderung der Sendesignalleistung eines Mobilteils durch Über- bzw. Unterschreiten eines Signalpegel-Schwellwertes durch eine Anzahl von Werten eines durch die Basisstation gemessenen Signalpegels sowie Über bzw. Unterschreiten eines Qualitäts-Schwellwertes durch eine Anzahl von Werten eines durch die Basisstation gemessenen Qualitätsparameterwertes eingeleitet wird.

Bei der mobilen Funksende-/Funkempfangseinrichtung, insbesondere Mobilteil eines Schnurlos-Telekommunikationssystems nach DE 44 26 255 A1 soll unabhängig von einer Empfangspegelbewertung mittels Basisstation das Mobilteil selbständig in der Lage sein, die Sendeleistung zu regeln, um den Leistungs- bzw. Energieverbrauch zu reduzieren, so daß sich eine maximal mögliche Betriebsdauer im Standby- oder aktiven Betrieb ergibt.

Die Aufgabe der vorliegenden Erfindung ist somit, ein Verfahren und ein System zur Regelung der Übertragungsleistung einer Mobilstation eines Mobilfunksystems gemäß Anspruch 1 bzw. Anspruch 6 zu schaffen, die eine Verringerung der in der Mobilstation verbrauchten Energie ermöglichen.

Diese Aufgabe wird durch ein Verfahren und ein System zur Regelung der Übertragungsleistung einer Mobilstation eines Mobilfunksystems gemäß dem beigefügten Anspruch 1 bzw. dem beigefügten Anspruch 6 gelöst. Vorteilhafte Weiterbildungen der vorliegenden Erfindung sind in den jeweiligen Unteransprüchen angegeben.

Das erfindungsgemäße Verfahren sowie das erfindungsgemäße System zur Übertragung der Ubertragungsleistung einer Mobilstation finden in einem Mobilfunksystem Anwendung, bei dem Informationen in verschiedenen Trägerfrequenzen mittels einem Frequenzsprungverfahren übertragen werden. Das erfindungsgemäße System umfaßt eine Einrichtung zum Empfangen von von einer Mobilstation übertragenen Informationen in einer Feststation. Weiterhin ist eine Einrichtung zum Detektieren der Übertragungsqualität der übertragenen Informationen in der Feststation vorgesehen. Falls die Übertragungsqualität gut ist und die Informationen mit einer hohen Übertragungsleistung übertragen wurden, wird in einer entsprechenden Einrichtung eine erste Nachricht zum Senden der Übertragungsleistung an die Mobilstation übertragen. Falls die Übertragungsqualität schlecht ist und die Information mit einer niedrigen Übertragungsleistung übertragen wurden, wird in der Einrichtung eine zweite Nachricht zum Erhöhen der Ubertragungsleistung an die Mobilstation übertragen. Gemäß der vorliegenden Erfindung wird somit die in der Mobilstation verwendete Übertragungsleistung zum Übertragen von Informationen an eine Feststation abhängig von der Qualität der übertragenen Informationen angepaßt. Falls die Übertragungsqualität gut genug ist, so kann eine niedrige Übertragungsleistung in der Mobilstation verwendet werden, wodurch die in der Mobilstation verbrauchte Energie beträchtlich gesenkt werden kann.

Die Mobilstation umfaßt eine Einrichtung zum Senken der Übertragungsleistung, wenn sie die erste Nachricht empfängt, und zum Erhöhen der Übertragungsleistung, wenn sie die zweite Nachricht empfängt.

Vorteilhafterweise umfaßt die Einrichtung zum Detektieren der Übertragungsqualität der übertragenen Informationen in der Feststation, falls das Mobilfunksystem auf dem DECT-Standard oder einem ähnlichen Standard betrieben wird, Mittel zum Feststellen, ob ein Fehler in den zyklisch redundanten Bits des A-Feldes (A-CRC-Fehler) vorhanden ist, Mittel zum Feststellen, ob ein Fehler in den zyklisch redundanten Bits des X-Feldes (X-CRC-Fehler) vorhanden ist, Mittel zum Feststellen, ob ein Datenpaket verlorengegangen ist, und Mittel zum Feststellen, ob der Wert des Radiosignal-Stärkenindikators (RSSI-Wert) unter einem bestimmten Schwellenwert liegt.

Wenn zumindest eines der genannten Mittel eine positive Feststellung trifft, entscheidet die Detektionseinrichtung, daß die Übertragungsqualität schlecht ist. Wenn alle genannten Mittel eine negative Feststellung treffen, entscheidet die Detektionseinrichtung, daß die Übertragungsqualität gut ist.

Die von der Mobilstation verwendete hohe Übertragungsleistung kann beispielsweise eine maximale Übertragungsleistung von einigen hundert mW sein, während die niedrige Übertragungsleistung beispielsweise einige zehn mW betragen kann.

Die Erfindung wird nun anhand eines Ausführungsbeispieles und bezugnehmend auf die begleitenden Zeichnungen näher erläutert. Es zeigen:
Fig. 1 eine Anordnung zur digitalen Funk-Übertragung von Daten,
Fig. 2 eine schematische Darstellung des bekannten DECT-Standards,
Fig. 3 eine schematische Darstellung der Kanalbelegung bei der Anpassung des bekannten DECT-Standards an das amerikanische ISM-Band, und
Fig. 4 eine besonders effektive Belegung der Kanäle des an das ISM-Band angepaßten DECT-Standards,
Fig. 5 zeigt eine schematische Darstellung einer erfindungsgemäßen Feststation,
Fig. 6 zeigt eine schematische Darstellung einer erfindungsgemäßen Mobilstation und
Fig. 7 zeigt ein Flußdiagramm mit dem erfindungsgemäßen Verfahren zur Regelung der Übertragungsleistung einer Mobilstation.

In Fig. 1 ist eine Anordnung zur digitalen Funk-Übertragung von Daten vorgesehen. Eine Feststation 1 ist dabei mittels einer Endstellenleitung 10 mit dem Festnetz verbunden. Die Feststation 1 weist ein HF-Modul 4 auf, durch das Daten mittels einer Antenne 6 aussendbar bzw. empfangbar sind. Das HF-Modul 4 kann insbesondere ein sogenanntes Slow-Hopping HF-Modul sein, d. h. ein besonders kostengünstiges HF-Modul, das indessen einen gewissen Zeitraum zum Wechsel von einer Trägerfrequenz auf eine andere Trägerfrequenz benötigt. Dieser Zeitraum liegt in der Größenordnung eines Zeitschlitzes, d. h. zwischen ca. 100 µs und 1 ms, und insbesondere zwischen ca. 300 µs und 500 µs. Dieser für den Trägerfrequenz-Wechsel benötigte Zeitraum kann beispielsweise dem Zeitraum entsprechen, der durch einen Zeitschlitz eines Zeitmultiplex-Verfahrens (TDMA) ausgefüllt wird. Mittels der Antenne 6 kann über eine Funkübertragungsstrecke 8 eine Funkübertragung zu einer Mobilstation 2 bzw. über eine zweite Funkübertragungsstrecke 9 eine Funkübertragung zu einer Mobilstation (schnurloses Telefon) 3 erfolgen. Alle in Fig. 1 dargestellten Mobilstationen weisen den gleichen Aufbau auf, so daß eine nähere Erläuterung nur anhand der dargestellten Mobilstation 2 erfolgen soll.

Wie in Fig. 1 ersichtlich, weist diese Mobilstation 2 eine Antenne 7 zum Empfang bzw. zum Senden von Daten von bzw. zu der Feststation 1 auf. In der Mobilstation 2 ist ein HF-Modul 5 vorgesehen, das im wesentlichen dem in der Feststation 1 verwendeten HF-Modul 4 entspricht. Bei dem HF-Modul 5 der Mobilstation 2 kann es sich also auch um ein sogenanntes Slow-Hopping HF-Modul handeln.

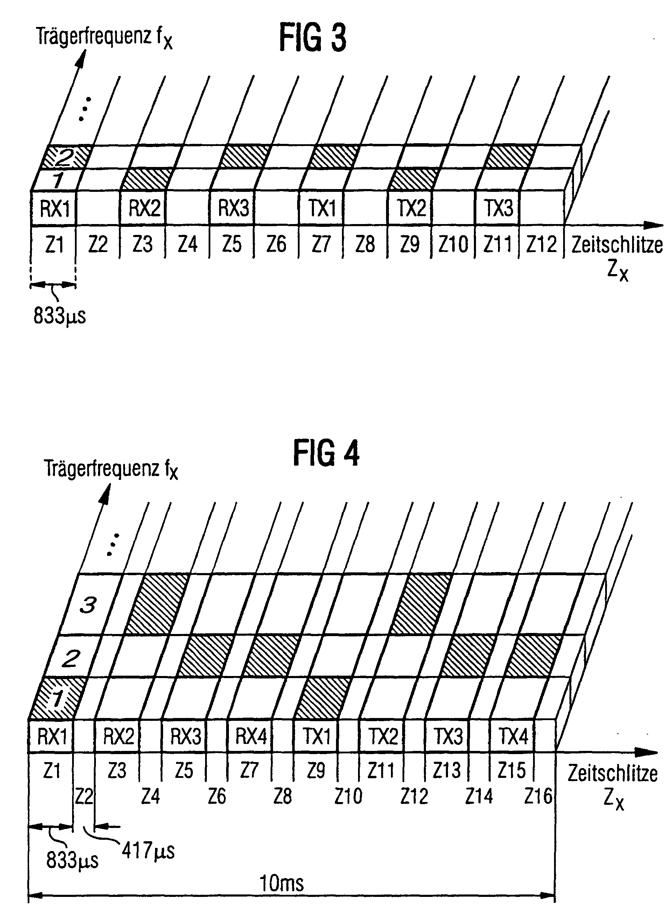

Bezugnehmend auf Fig. 3 soll nun erläutert werden, wie der bekannte DECT-Standard auf das amerikanische ISM-Band angepaßt werden kann. Wie bereits zuvor erläutert, wäre bei einer Beibehaltung des DECT-Standards die resultierende Datenrate für das ISM-Band zu hoch. Wie in Fig. 3 ersichtlich, kann aus diesem Grund die Zeitschlitz-Anzahl pro Rahmen halbiert werden, d. h. in den zehn Millisekunden eines Zeitrahmens sind anstatt der 24 Zeitschlitze (Kanäle) des DECT-Standards nur noch 12 Zeitschlitze Z1 - Z12 vorgesehen, in denen jeweils 480 Bit übertragen werden können. Durch die Halbierung der Zeitschlitzanzahl halbiert sich entsprechend auch die Datenrate auf (12 x 480 Bit)/10 ms = 576000 Bit/s. Diese niedrigere Datenrate hat eine für das amerikanische ISM-Band akzeptable Bandbreite zur Folge.

Wie in Fig. 3 indessen ersichtlich ist, müssen bei einer kostengünstigen Realisierung der für die Funkübertragung benötigten Geräte sogenannte Slow-Hopping HF-Module vorgesehen sein, was bedeutet, daß nach jedem aktiven Zeitschlitz, in dem Daten übertragen werden, ein inaktiver Zeitschlitz (blind slot) folgen muß, in dem keine Daten übertragen werden können. Bei zwölf vorgesehenen Zeitschlitzen Z1- -Z12 (6 Zeitschlitze Z1 - Z6 für die Übertragung von einer Feststation zu der Mobilstation und sechs Zeitschlitze Z7 - -Z12 für die Übertragung von der Mobilstation zu einer Feststation) stehen somit maximal nur drei mögliche Verbindungen zur Verfügung. Bei einer Realisierung mit dem kostengünstigen Slow-Hopping HF-Modulen ist somit die nutzbare Kanalkapazität durch die Reglementierung durch das Slow-Hopping HF-Modul auf maximal drei Verbindungen nicht sehr groß.

In Fig. 3 sind mögliche aktive Zeitschlitze schraffiert dargestellt. Beispielsweise kann in dem Zeitschlitz Z1 wie dargestellt mit der Trägerfrequenz f₂ eine Übertragung von der Feststation 1 zu einer Mobilstation 2, 3 erfolgen (RX1). Wenn auf diesen Zeitschlitz Z1 ein Zeitschlitz Z2 folgt, in dem keine Datenübertragung stattfindet (inaktiver Zeitschlitz, blind slot), kann auch ein Slow-Hopping HF-Modul die Zeitdauer des inaktiven Zeitschlitzes Z2 zum Wechsel der Trägerfrequenz benutzen. Wie in Fig. 3 dargestellt, kann die Trägerfrequenz beispielsweise von der Trägerfrequenz f₂ auf die Trägerfrequenz f₁ gewechselt werden. Somit kann in dem Zeitschlitz Z3, wie in Fig. 3 dargestellt, eine Übertragung von der Feststation zu einer Mobilstation auf der Trägerfrequenz f₁ erfolgen (RX2). Das in Fig. 3 gezeigte Schema zeichnet sich also dadurch aus, daß bei der gegebenen Zeitschlitzverteilung ein aktiver Zeitschlitz (schraffiert dargestellt) mit jeder der vorgegebenen Trägerfrequenzen (f₁, f₂ ...) betrieben werden kann.

Es wird daran erinnert, daß gemäß dem DECT-Standard die Organisation der Wiederverwendung von physikalischen Kanälen mittels einer dynamischen Kanalwahl (dynamic channel selection) erfolgt, wobei ein Kanal durch seine Trägerfrequenz und seinen Zeitschlitz definiert ist. Somit kann eine aufwendige Frequenzplanung wie in zellularen Systemen unterbleiben. Für einen Verbindungsaufbau werden kontinuierlich die Signalpegel aller Kanäle gemessen und in einer Kanalliste (channel map) die störungsfreien Kanäle verwaltet. Während einer Verbindung werden weiterhin die Signalpegel aller Kanäle aller möglichen Trägerfrequenzen sowie die Empfangsqualität überwacht.

Wenn also, wie in Fig. 3 dargestellt, im Zeitschlitz Z1 bei der Übertragung (RX1) auf der Trägerfrequenz f₂ festgestellt wird, daß die Empfangs- bzw. Sendeverhältnisse auf der Trägerfrequenz f₁ günstiger sind, kann während der Zeitdauer des Zeitschlitzes Z2, in dem keine Datenübertragung stattfindet, auf die als günstiger erkannte Trägerfrequenz 1 gewechselt werden. Die Übertragung RX2 während des Zeitschlitzes Z3 erfolgt auf der als günstiger erkannten Trägerfrequenz f₂.

Als bevorzugte Alternative zu diesem Ansatz, bei dem eine Trägerfrequenz nur im Falle einer Störung gewechselt wird, kann auch ein sogenanntes Frequency-Hopping-Verfahren (Frequency Hopping Spread Spectrum) verwendet werden, bei dem die Trägerfrequenz nach einem vorbestimmten Zeitraum, beispielsweise einem Rahmen oder einen Zeitschlitz der Übertragung gewechselt wird, unabhängig davon, ob die gerade verwendete Trägerfrequenz gestört ist oder nicht. Somit kann die ausgestrahlte Energie über mehrere Trägerfrequenzen verteilt werden, was insgesamt zu einer geringeren Beeinträchtigung von anderen Systemen in Sendereichweite führt.

Es ist dabei darauf zu achten, daß alle Trägerfrequenzen entsprechend den Vorschriften der FCC part 15 im Mittel gleich oft benutzt werden.

Wie bereits ausgeführt, hat das in Fig. 3 dargestellte Belegungsschema für die Kanäle den Nachteil, daß aufgrund der Halbierung der Zeitschlitz-Anzahl pro Zeitrahmen auf 12, wodurch die Dauer eines Zeitschlitzes auf 833 µs verdoppelt wird, und der Notwendigkeit der inaktiven Zeitschlitze nach jedem aktiven Zeitschlitz zur Folge, daß nur noch drei mögliche Verbindungen (drei Verbindungen von einer Feststation zu einer Mobilstation und drei Verbindungen von einer Mobilstation zu einer Feststation) im Gegensatz zu den sechs gemäß dem DECT-Standard möglichen Verbindungen gegeben sind.

In Fig. 4 ist eine Zeitschlitz-Struktur dargestellt, die eine Erhöhung der maximal möglichen Verbindungen von drei auf vier gestattet, ohne daß die flexible Wahl der Trägerfrequenzen von einem aktiven Zeitschlitz zum nächsten aktiven Zeitschlitz beeinträchtigt werden würde bzw. ohne daß die Programmierung der Synthesizer in den HF-Modulen 4, 5 beeinträchtigt würde. Wie in Fig. 4 ersichtlich, wird diese Erhöhung der maximalen Verbindungen von drei auf vier im wesentlichen dadurch erreicht, daß die Zeitdauer eines inaktiven Zeitschlitzes, während dem keine Datenübertragung stattfindet, im Vergleich zur Zeitdauer eines aktiven Zeitschlitzes verkürzt wird. Wie in Fig. 4 gezeigt, beträgt die Zeitdauer eines aktiven Zeitschlitzes Z1, Z3, Z5, Z7, Z9, Z11, Z13 und Z15 eines Zeitrahmens jeweils 833 µs, wenn der Zeitrahmen insgesamt 10 ms beträgt. Die Zeitdauer der inaktiven Zeitschlitze Z2, Z4, Z6, Z8, Z10, Z12, Z14 und Z16 beträgt, wie in Fig. 4 dargestellt, nur 417 µs und somit im wesentlichen nur die Hälfte der Zeitdauer der aktiven Zeitschlitze. Einem aus der DECT-Technik bekannten Slow-Hopping HF-Modul steht nach einem aktiven Zeitschlitz ein inaktiver Zeitschlitz von 417 µs zur Verfügung, um eine Frequenzprogrammierung für die Trägerfrequenz des nachfolgenden Zeitschlitzes auszuführen. Ein halber Zeitschlitz des an das ISM-Band angepaßten DECT-Standards mit einer Zeitdauer von 833 µs/2 = 417 µs genügt somit als inaktiver Zeitschlitz (blind slot).

Wie in Fig. 4 ersichtlich, kann beispielsweise eine Datenübertragung RX1 während des Zeitschlitzes Z1 von der Feststation zu einer Mobilstation auf einer Trägerfrequenz f₁ erfolgen. Um die Übertragung auch mit einer geringen Bandbreite ausführen zu können, beträgt dabei die Zeitdauer des Zeitschlitzes Z1 das doppelte der Zeitdauer gemäß dem DECT-Standard, nämlich 833 µs. Auf den Zeitschlitz Z1 folgt ein nichtaktiver Zeitschlitz Z2, dessen zeitliche Dauer nur 417 µs beträgt. Diese Zeitdauer von 417 µs genügen indessen einem HF-Modul der Slow-Hopping-Technik, die Trägerfrequenz für den folgenden aktiven Zeitschlitz Z3 zu programmieren. Falls somit erkannt wird, daß beispielsweise die Trägerfrequenz f₃ bessere Empfangsverhältnisse als die Trägerfrequenz f₁ bietet, kann während der Zeitdauer des Zeitschlitzes Z2, während dem keine Datenübertragung stattfindet, die Trägerfrequenz von der Trägerfrequenz f₁ des Zeitschlitzes Z1 auf die Trägerfrequenz f₃ für den Zeitschlitz Z3 erfolgen, und während des Zeitschlitzes Z3 kann somit eine Übertragung von einer Feststation zu einer Mobilstation erfolgen (RX3).

Im dargestellten Beispiel ist der Fall dargestellt, daß die Trägerfrequenz fx zur Übertragung zwischen einer Feststation und einer bestimmten Mobilstation nicht gewechselt wird.

Als Alternative kann natürlich auch ein sogenanntes Frequency-Hopping-Verfahren verwendet werden, bei dem die Trägerfrequenz nach einem vorbestimmten Zeitraum, beispielsweise einem Rahmen der Übertragung gewechselt wird.

Nach acht Zeitschlitzen Z1 bis Z8, was der Hälfte der Zeitschlitze Z1 bis Z16 eines Zeitrahmens von 10 ms entspricht, erfolgt gemäß dem Duplex-Verfahren (TTD) die Übertragung von der oder den Mobilstationen zu der Feststation. Beispielsweise kann während des Zeitschlitzes Z9 eine Übertragung (TX1) von einer Mobilstation zu der Feststation mit einer Trägerfrequenz f₁ erfolgen. Der auf den aktiven Zeitschlitz Z9 folgende inaktive Zeitschlitz Z10 weist wiederum in seiner zeitlichen Dauer nur die Hälfte, nämlich 417 µs, der zeitlichen Dauer des aktiven Zeitschlitzes Z9 (833 µs) auf. Die Zeitdauer des inaktiven Halb-Zeitschlitzes Z10 reicht für die HF-Module wiederum aus, um die Frequenzprogrammierung für den folgenden aktiven Zeitschlitz Z11 für eine weitere Übertragung von einer Mobilstation zu der Feststation (TX2) vorzunehmen.

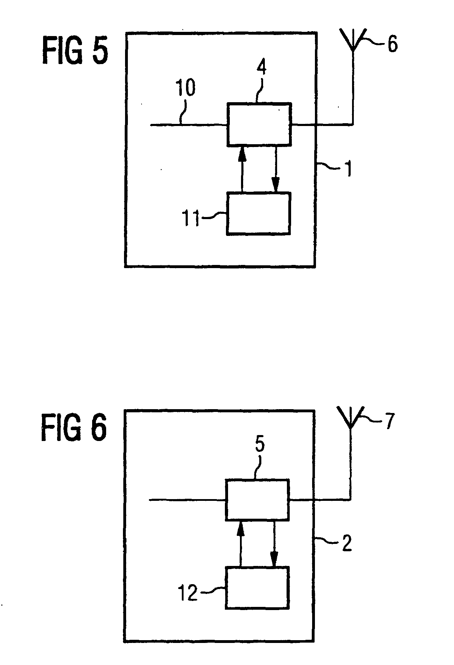

In Figur 5 ist eine Feststation 1 gemäß der vorliegenden Erfindung schematisch dargestellt. Die Feststation umfaßt eine Antenne 6 zum Aussenden und Empfangen von Informationen an bzw. von einer oder mehreren Mobilstationen 2, sowie ein HF-Modul 4, das zum Aufmodulieren bzw. Demodulieren von Informationen auf bzw. von Trägerfrequenzen dient. Das HF-Modul ist über eine Endstellenleitung 10 mit dem Festnetz verbunden.

Die Feststation 1 umfaßt weiterhin eine Einrichtung 11 zum Detektieren der Übertragungsqualität der von einer Mobilstation übertragenen Informationen. Die Einrichtung 11 erzeugt eine erste Nachricht zum Senken der Übertragungsleistung für den Fall, daß die Übertragungsqualität gut ist und die Informationen mit einer hohen Übertragungsleistung übertragen wurden. Die Einrichtung 11 erzeugt eine zweite Nachricht zum Erhöhen der Übertragungsleistung der Mobilstation, falls die Übertragungsqualität schlecht ist und die Informationen mit einer niedrigen Übertragungsleistung übertragen wurden.

Beim Beginn einer Verbindung zwischen einer Mobilstation 2 und einer Feststation 1 überträgt die Mobilstation, die einen schematischen Aufbau aufweist, wie er beispielsweise in Figur 6 gezeigt ist, über ihr HF-Modul 5 und die Antenne 7 Informationen mit einer hohen Übertragungsleistung an die Feststation 1. Die Feststation 1 empfängt die mit einer hohen Übertragungsleistung empfangenen Informationen über die Antenne 6 und das HF-Modul 4. Die Einrichtung 11, die mit dem HF-Modul 4 verbunden ist, detektiert, ob die Übertragungsqualität der von der Mobilstation 2 empfangenen Stationen gut oder schlecht ist. Falls die Übertragungsqualität gut ist, erzeugt die Einrichtung 11 in der Feststation 1 eine erste Nachricht, die über das HF-Modul 4 und die Antenne 6 an die Mobilstation 2 gesendet wird. Die Mobilstation 2 empfängt die erste Nachricht über ihre Antenne 7 und das HF-Modul 5. Eine Einrichtung 12, die mit dem HF-Modul 5 verbunden ist, detektiert die erste Nachricht in der Mobilstation 2 und senkt die Übertragungsleistung. Die von der Mobilstation 2 an die Feststation übertragenen Informationen werden somit von der Mobilstation 2 mit einer niedrigen Übertragungsleistung ausgesendet, da der Übertragungskanal eine Übertragung der Informationen mit einer guten Qualität ermöglicht.

Detektiert die Einrichtung 11 der Feststation 1 zu einem späteren Zeitpunkt, daß die mit einer niedrigen Übertragungsleistung von der Mobilstation 2 übertragenen Informationen eine schlechte Übertragungsqualität aufweisen, so erzeugt sie eine zweite Nachricht, die über das HF-Modul 4 und die Antenne 6 an die Mobilstation 2 ausgesendet wird. Die Mobilstation 2 empfängt die zweite Nachricht über ihre Antenne 7 und das HF-Modul 5. Die Einrichtung 12 der Mobilstation 2 detektiert die zweite Nachricht und erhöht die Übertragungsleistung entsprechend, um eine Übertragungsinformation mit einer entsprechenden Qualität an die Feststation 1 zu gewährleisten.

Beim Beginn der Übertragung werden Informationen von der Mobilstation 2 somit immer mit hoher Übertragungsleistung, z.B. einige hundert mW übertragen. Die niedrige Übertragungsleistung, auf die bei entsprechender Übertraqungsqualität geschaltet wird, kann beispielsweise einige zehn mW sein.

Die Einrichtung 11 zum Detektieren der Übertragungsqualität der von der Mobilstation 2 übertragenen Informationen in der Feststation 1 stellt die Übertragungsqualität anhand mehrerer Kriterien fest. Diese Kriterien sind abhängig von dem Standard, auf dem das Mobilfunksystem basiert. Für den Fall, daß das erfindungsgemäße Mobilfunksystem auf dem DECT-Standard oder einem ähnlichem Standard, z.B. zur Übertragung von Informationen im ISM-Band basiert, wie oben erläutert wurde, umfaßt die Einrichtung 11 Mittel zum Feststellen, ob ein Fehler in den zyklisch redundanten Bits des A-Feldes (A-CRC-Fehler) vorhanden ist, Mittel zum Feststellen, ob ein Fehler in den zyklisch redundanten Bits des X-Feldes (X-CRC-Fehler) vorhanden ist, Mittel zum Feststellen, ob ein Datenpaket verlorengegangen ist, und Mittel zum Feststellen, ob der Wert des Radiosignal-Stärkenindikators (RSSI-Wert) unter einem bestimmten Schwellenwert liegt. Wenn beispielsweise zumindest eines der genannten Mittel eine positive Feststellung trifft, entscheidet die Einrichtung 11, daß die Übertragungsqualität schlecht ist und erzeugt die zweite Nachricht zum Erhöhen der Übertragungsleistung der Mobilstation, falls die Informationen mit einer niedrigen Übertragungsleistung übertragen wurden. Wenn alle genannten Mittel eine negative Feststellung treffen, entscheidet die Einrichtung 11, daß die Übertragungsqualität gut ist, und erzeugt die erste Nachricht zum Senken der Übertragungsleistung der Mobilstation, falls die Informationen mit einer hohen Übertragungsleistung übertragen wurden.

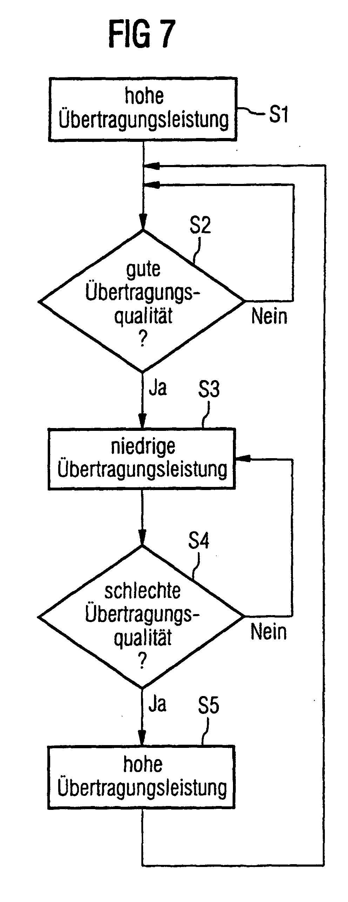

In Fig. 7 ist schematisch der erfindungsgemäße Verfahrensablauf zum Regeln der Übertragungsleistung der Mobilstation 2 in einem Flußdiagramm dargestellt. In einem ersten Schritt S1 werden Informationen von der Mobilstation 2 mit einer hohen Übertragungsleistung an die Feststation 1 übersendet. In einem zweiten Schritt S2 wird in der Feststation 1 beurteilt, ob die Übertragungsqualität der von der Mobilstation 2 übertragenen Informationen gut ist. Falls nicht, wird die Übertragungsleistung der Mobilstation 2 nicht verändert und die Feststation 1 prüft weiterhin in regelmäßigen Abständen die Übertragungsqualität der von der Mobilstation 2 empfangenen Informationen. Falls die Feststation 1 feststellt, daß die Übertragungsqualität gut ist, so wird die Mobilstation 2 im nächsten Schritt S3 auf niedrige Übertragungsleistung geschaltet. Das erfolgt, wie oben erläutert wurde, mittels der von der Feststation 1 erzeugten und an die Mobilstation 2 übermittelten ersten Nachricht, die von der Mobilstation 2 empfangen wird. Die Feststation prüft im nächsten Schritt S4, ob die von der Mobilstation 2 mit einer niedrigen Übertragungsleistung übertragenen Informationen eine schlechte Übertragungsqualität aufweisen. Falls nicht, so wird an der Übertragungsleistung der Mobilstation nichts geändert und diese fährt fort, Informationen mit einer niedrigen Übertragungsleistung zu übertragen. Falls die Feststation 1 feststellt, daß die mit einer niedrigen Übertragungsleistung übertragenen Informationen eine schlechte Übertragungsqualität aufweisen, so wird im nächsten Schritt S5 die Übertragungsleistung der Mobilstation 2 wieder auf die hohe Übertragungsleistung geschaltet. Dazu wird, wie oben erläutert wurde, von der Feststation 1 die erste Nachricht erzeugt und an die Mobilstation 2 übermittelt. Da die Mobilstation daraufhin Informationen wieder mit der hohen Übertragungsleistung an die Feststation 1 übermittelt, beginnt diese wiederum im Schritt S2, festzustellen, ob die übertragenen Informationen eine gute Übertragungsqualität aufweisen.

Das erfindungsgemäße Verfahren und das erfindungsgemäße System dienen zur Verringerung des Energieverbrauches in den in der Regel batterie- oder akkubetriebenen Mobilstationen eines Mobilfunksystems.

## Patentansprüche

1. Verfahren zur Regelung der Übertragungsleistung einer Mobilstation eines Mobilfunksystems, in dem Informationen in verschiedenen Trägerfrequenzen mittels eines Frequenzsprungverfahrens übertragen werden, mit den folgenden Schritten:
- Empfangen von Informationen in einer Feststation (1), die von einer Mobilstation (2) übertragen werden,
- Detektieren der Übertragungsqualität der übertragenen Informationen in der Feststation (1), im DECT-Standard oder einem ähnlichen Standard folgende Schritte umfassend:
a) Feststellen, ob ein Fehler in den zyklisch redundanten Bits des A-Feldes, A-CRC-Fehler, vorhanden ist,
b) Feststellen, ob ein Fehler in den zyklisch redundanten Bits des X-Feldas, X-CRC-Fehler, vorhanden ist,
c) Feststellen, ob ein Datenpaket verloren gegangen ist,
d) Feststellen, ob der Wert des Radiosignal-Stärkenindikators RSSI unter einem bestimmten Schwellenwert liegt.
- falls alle Feststellungen a), b), c) und d) negativ sind und die Informationen mit einer hohen Übertragungsleistung übertragen wurden: Übertragen einer ersten Nachricht zum Senken der Übertragungsleistung an die Mobilstation (2),
- falls eine der Feststellungen a), b), c) oder d) positiv ist und die Informationen mit einer niedrigen Übertragungsleistung übertragen wurden: Übertragen einer zweiten Nachricht zum Erhöhen der Übertragungsleistung an die Mobilstation (2).

2. Verfahren zur Regelung der Übertragungsleistung einer Mobilstation eines Mobilfunksystems gemäß Anspruch 1,
**dadurch gekennzeichnet,**
**daß** die Mobilstation (2) ihre Übertragungsleistung senkt, wenn sie die erste Nachricht empfängt, und ihre Übertragungsleistung erhöht, wenn sie die zweite Nachricht empfängt.

3. System zur Regelung der Übertragungsleistung einer Mobilstation eines Mobilfunksystems, in dem Informationen in verschiedenen Trägerfrequenzen mittels einem Frequenzsprungverfahren übertragen werden, mit einer Feststation (1) mit
- Empfangseinrichtung (4), derart ausgestaltet, daß Informationen, die von einer Mobilstation (2) übertragen werden, empfangen werden,
- einer Detektierungseinrichtung (11) im DECT-Standard oder einem ähnlichen Standard aufweisend
a) Feststellmittel, derart ausgestaltet, dass ein Fehler in den zyklisch redundanten Bits des A-Feldes, A-CRG-Fehler, detektiert wird,
b) Feststellmittel, derart ausgestaltet, dass ein Fehler in den zyklisch redundanten Bits des X-Feldes, X-CRC-Fehler, detektiert wird,
c) Feststellmittel, derart ausgestaltet, daß ein verloren gegangenes Datenpaket detektiert wird,
d) Feststellmittel, derart ausgestaltet, dass eine Schwellwertunterschreitung des Wertes des Radiosignal-Stärkenindikators RSSI detektiert wird.
- Übertragseinrichtung, derart ausgestaltet, daß eine erste Nachricht zum Senken der Übertragungsleistung, an die Mobilstation gesendet wird, wenn alle Feststellmittel a), b), c) und d) eine negative Feststellung treffen und die Informationen mit einer hohen Übertragungsleistung übertragen wurden, eine zweite Nachricht zum Erhöhen der Ubertragungsleistung, an die Mobilstation gesendet wird, wenn zumindest eines der Feststellmittel a), b), c) oder d) eine positive Feststellung trifft und die Inrormationen mit einer niedrigen Übertragungsleistung übertragen wurden.

4. System zur Regelung der Übertragungsleistung einer Mobilstation eines Mobilfunksystems gemäß Anspruch 3,
**dadurch gekennzeichnet,**
**daß** die Mobilstation (2) eine Einrichtung (12) zum Senken der Übertragungsleistung, wenn sie die erste Nachricht empfängt, und zum Erhöhen der Übertragungsleistung, wenn sie die zweite Nachricht empfängt, aufweist.

## Claims

1. Method for regulating the transmission power of a mobile station of a mobile radio system, in which information is transmitted at different carrier frequencies by means of a frequency-hopping method, with the following stages:
- receipt of information in a fixed station (1), which is transmitted from a mobile station (2),
- detection of the transmission quality of the transmitted information in the fixed station (1), comprising the following stages in the DECT standard or a similar standard:
a) determination whether an error exists in the cyclically redundant bits of the A field, A-CRC error,
b) determination whether an error exists in the cyclically redundant bits of the X field, X-CRC error,
c) determination whether a data packet has got lost,
d) determination whether the value of the radio signal strength indicator RSSI is below a defined threshold value.
- if all the determinations a), b), c) and d) are negative and the information was transmitted with a high level of transmission power: transmission of a first message to reduce transmission power to the mobile station (2),
- if one of the determinations a), b), c) or d) is positive and the information was transmitted with a low level of transmission power: transmission of a second message to increase transmission power to the mobile station (2).

2. Method for regulating the transmission power of a mobile station of a mobile radio system according to Claim 1,
**characterized in that**
the mobile station (2) reduces its transmission power, if it receives the first message, and increases its transmission power, if it receives the second message.

3. System for regulating the transmission power of a mobile station of a mobile radio system, in which information is transmitted at different carrier frequencies by means of a frequency-hopping method, with a fixed station (1) with
- a receiving device (4) configured so that information transmitted from a mobile station (2) is received,
- a detection device (11) in the DECT standard or a similar standard, comprising
a) determination means configured so that an error is detected in the cyclically redundant bits of the A field, A-CRC error,
b) determination means configured so that an error is detected in the cyclically redundant bits of the X field, X-CRC error,
c) determination means configured so that a lost data packet is detected,
d) determination means configured so that a radio signal strength indicator RSSI value below the threshold value is detected.
- transmission device configured so that a first message to reduce transmission power is transmitted to the mobile station, if all the determination means a), b), c) and d) make a negative determination and the information was transmitted with a high level of transmission power, a second message to increase transmission power is transmitted to the mobile station, if at least one of the determination means a), b), c) or d) makes a positive determination and the information was transmitted with a low level of transmission power.

4. System for regulating the transmission power of a mobile station of a mobile radio system according to Claim 3,
**characterized in that**
the mobile station (2) comprises a device (12) to reduce the transmission power, if it receives the first message, and to increase transmission power, if it receives the second message.

## Revendications

1. Procédé pour la régulation de la puissance de transmission d'un poste mobile d'un système de radiocommunication mobile, dans lequel des informations sont transmises à différentes fréquences porteuses à l'aide d'un procédé de sauts de fréquences, avec les étapes suivantes :
- réception dans un poste fixe (1) d'informations transmises par un poste mobile (2),
- détection de la qualité de transmission des informations transmises dans le poste fixe (1), au standard DECT ou à un autre standard similaire, comprenant les étapes consistant à :
a) constater si un défaut est présent dans les bits cycliquement redondants du champ A, défaut A-CRC,
b) constater si un défaut est présent dans les bits cycliquement redondants du champ X défaut X-CRC,
c) constater si un paquet de données s'est perdu,
d) constater si la valeur de l'indicateur d'intensité du signal radio RSSI est inférieure à une certaine valeur seuil.
- Si toutes les constatations a), b), c) et d) sont négatives et si les informations on été transmises à une haute puissance de transmission : transmission d'un premier message pour abaisser la puissance de transmission au poste mobile (2),
- si l'une des constatations a), b), c) et d) est positive et si les informations ont été transmises à une faible puissance de transmission : transmission d'un second message pour augmenter la puissance de transmission au poste mobile (2).

2. Procédé pour la régulation de la puissance de transmission d'un poste mobile d'un système de radiocommunication mobile selon la revendication 1, **caractérisé en ce que** le poste mobile (2) abaisse sa puissance de transmission lorsqu'il réceptionne le premier message et augmente sa puissance de transmission lorsqu'il réceptionne le second message.

3. Système pour la régulation de la puissance de transmission d'un poste mobile d'un système de radiocommunication mobile, dans lequel des informations sont transmises à différentes fréquences porteuses à l'aide d'un procédé de sauts de fréquences, avec un poste mobile (1) avec
- un système de réception (4), conçu de façon à ce que des informations qui sont transmises par un poste mobile (2) soient réceptionnées,
- un système de détection (11) au standard DECT ou à un standard similaire, présentant
a) des moyens de constatation, conçus de façon à ce qu'un défaut dans les bits cycliquement redondants du champ A, défaut A-CRC soit détecté,
b) des moyens de constatation, conçus de façon à ce qu'un défaut dans les bits cycliquement redondants du champs X, défaut X-CRC soit détecté,
c) des moyens de constatation, conçus de façon à ce qu'un paquet de donnée qui s'est perdu soit détecté,
d) des moyens de détection, conçus de façon à ce qu'un sous-dépassement d'une valeur seuil pour la valeur de l'indicateur d'intensité du signal radio soit détecté.
- Un système de transmission, conçu de façon à ce qu'un premier message pour abaisser la puissance de transmission soit émis vers le poste fixe, lorsque tous les moyens de constatation a), b), c) et d) procèdent à une constatation négative et si les informations ont été transmises à une haute puissance de transmission, à ce qu'un second message pour augmenter la puissance de transmission soit émis vers le poste mobile, si au moins l'un des moyens de constatation a), b), c) ou d) procède à une constatation positive et si les informations ont été transmises à une faible puissance de transmission.

4. Système pour la régulation de la puissance de transmission d'un poste mobile d'un système de radiocommunication mobile selon la revendication 3, **caractérisé en ce que** le poste mobile (2) présente un système (12) pour abaisser la puissance de transmission, lorsqu'il réceptionne le premier message et pour augmenter la puissance de transmission, lorsqu'il réceptionne le second message.
